# EUROPÄISCHE PATENTSCHRIFT

(11) **EP 3 193 677 B1**
(45) Veröffentlichungstag und Bekanntmachung des Hinweises auf die Patenterteilung: **03.04.2019**
(21) Anmeldenummer: 15771520.2
(22) Anmeldetag: 10.09.2015
(51) Int. Cl.: A47J 31/057, A47J 31/06

(54) **AUTOMAT ZUM BRÜHEN VON TEE**
MACHINE FOR BREWING TEA
MACHINE AUTOMATIQUE POUR L'INFUSION DU THÉ

(30) Priorität: 19.09.2014 CH 14192014; 03.07.2015 CH 966152015
(43) Veröffentlichungstag der Anmeldung: 26.07.2017
(73) Patentinhaber: Krinitchko, Bogdan, 8952 Schlieren (CH)
(72) Erfinder: Krinitchko, Bogdan, 8952 Schlieren (CH)
(74) Vertreter: Herrmann, Johanna
(86) Internationale Anmeldenummer: PCT/EP2015/070693
(87) Internationale Veröffentlichungsnummer: WO 2016/041835

(56) Entgegenhaltungen:
- EP-A1- 1 808 110
- WO-A1-99/34716
- US-B1- 6 964 222

## Beschreibung

Diese Erfindung betrifft einen Automaten, welcher dazu dient, Tee vollautomatisch aus seiner Ausgangsform, das heisst aus Teepulver, Teeblättern oder aus Beuteltee in ein Tee-Getränk umzuwandeln, indem der Tee gebrüht wird und nach dem Brühvorgang in ein dazu geeignetes Gefäss, zum Beispiel in eine Teetasse abgelassen wird. Dabei können Eckdaten des Brühprozesses individuell direkt am Bedienfeld oder über eine Smartphone App ausgewählt und eingestellt werden.

Normalerweise wird für die Zubereitung einer Tasse Tee ein Beutel mit Tee oder Teepulver in einem Siebbehälter in heisses Wasser eingelegt oder mit heissem Wasser übergossen, und nach einer gewissen Brühzeit ist der Tee als Getränk servier- und trinkbereit. Bei dieser Zubereitung wird meistens unnötig viel elektrische Energie verbraucht, weil sehr oft mehr Wasser als die eigentlich für eine Tasse Tee notwendige Menge erhitzt wird, und die Teezubereitung ist oft mit aufwändigem Hantieren verbunden: Es muss als Erstes Wasser in ein Gefäss gegeben werden, in welchem es erhitzt wird, danach muss das erhitzte Wasser dem Tee, welcher sich meistens in einem Teebeutel, welcher sich wiederum in einem Kochgefäss befindet, zugegeben werden und anschliessend, nachdem der Tee fertig zubereitet ist, muss der Teebeutel aus dem Kochgefäss wieder entfernt werden. Erst dann kann der Tee als Getränk genossen werden.

Es gibt auch Teeautomaten. Diese erhitzen das Wasser bis zum Siedepunkt in einem Behälter und der entstandene Dampf durchdringt dann ein Ziehgefäss, in welchem sich der Tee in einer durchlässigen Kapsel befindet. Diese Art der Teezubereitung unterscheidet sich von der klassischen Zubereitungsart, weil dem Tee nur wenig Zeit zum Brühen bleibt und der Tee als Getränk direkt in ein Trinkgefäss entleert wird.

Bei dieser automatischen Zubereitung ist es oft nicht mehr die "klassische Tee-Zubereitungsart", weil dem Tee nur wenig Zeit zum Brühen bzw. Ziehen gelassen wird. Dadurch müssen Einbussen im Geschmack hingenommen werden. Auch bei dieser Variante wird unnötig viel elektrische Energie verbraucht, weil alle Automaten, welche einen Durchlauferhitzer beinhalten oder grundsätzlich darauf ausgelegt sind, eine bestimmte Wassermenge in kürzester Zeit zu erhitzen, ein Heizelement beinhalten, welches ständig auf einer erhöhten Temperatur gehalten wird, um dadurch die Temperaturdifferenz zwischen der Ausgangstemperatur bis zur nötigen Endtemperatur des Wasser so klein als möglich zu halten. Durch diese permanente Temperierung des Heizelementes wird ein unnötig hoher Standby Strom verbraucht. Weiter sind die bekannten Teebrühgeräte so konzipiert, dass der Bediener vor Ort sein muss, um das Gerät direkt zu bedienen.
Die Druckschrift WO-A-99/34716 offenbart einen Automat zum Zubereiten von Tee und Ausgabe in ein Trinkgefäss, wobei er ein Gehäuse mit Abstellfläche für ein Trinkgefäss aufweist, und ein entnehmbares Brühgefäss zur Aufnahme des Tees, wobei das zugeführte Wasser mittels einer elektrischen Heizeinrichtung aufheizbar ist, sowie mit einer Wasserzufuhr mittels Pumpe aus einem zum Gehäuse gehörenden, herausnehmbaren Wasserbehälter.

Die Aufgabe der vorliegenden Erfindung ist es, einen Automaten für die Teezubereitung zu schaffen, der mit einem minimalen elektrischen Energieaufwand auskommt und ein Hantieren erspart und somit die Zubereitung maximal erleichtert und den Teezubereitungsprozess auch zeitlich maximal optimiert. Dabei soll der Automat Tee in hoher Qualität liefern, wie wenn er in klassischer Manier gebrüht worden wäre. Dieser Automat soll auch von einem beliebigen Ort aus fernsteuerbar sein.

Diese Aufgabe wird von einem Automaten zum Zubereiten von Tee mit den Merkmalen des Patentanspruchs 1 gelöst. Vorteilhafte Ausführungen und Variationen der Erfindung sind in den abhängigen Ansprüchen dargelegt. Vorteilhaft ist es, wenn ein Interface in Form einer Funkschnittstelle mit zugehöriger Funkantenne vorhanden ist, zur Kommunikation der Steuereinheit mit einem Smartphone über einen etablierten Kommunikationsstandard wie WIFI, Bluetooth, oder einem Computer bzw. Laptop via Internet, sodass der Automat fernbedienbar ist. Eine besonders vorteilhafte Ausgestaltung der Erfindung ist es, wenn der Automat so ausgebildet ist, dass die spezifische Brühtemperatur und Brühdauer mehrere unterschiedliche Modi für verschiedene Teesorten via Bedienfeld oder Smartphone der Schnittstelle in der Steuereinheit zuordenbar sind und individuell am Bedienfeld oder via Smartphone einstellbar sind.

Die typische Benutzung des Automaten kann wie folgt beschrieben werden: Dabei wird der Tee als Erstes, egal in welcher Form, ob als Teepulver oder als Beuteltee, in den Automaten eingelegt, oder direkt in sein Brühgefäss. Danach wird ein vom Benutzer eingestelltes Zubereitungsprogramm gestartet, wahlweise direkt am Automaten oder ferngesteuert über sein Smartphone. Nachdem der Automat das ausgewählte Zubereitungsprogramm abgeschlossen hat, wird der fertig zubereitete Tee vollautomatisch in ein geeignetes Trinkgefäss abgelassen. Der Vorteil der Erfindung besteht ausserdem darin, dass der Benutzer, nachdem er den Tee in die Maschine eingelegt hat und das Programm gestartet hat, sich nicht mehr um dessen Zubereitung und um das Servieren des Tees kümmern muss. Der Tee steht nach der Zubereitung in der Tasse trinkfertig zur Verfügung.

Der Automat wird in einer vorteilhaften Ausführung in den Zeichnungen dargestellt und in der nachfolgenden Beschreibung im Einzelnen erläutert und erklärt.

Es zeigt:
- Figur 1:: Den Automaten in einem Schnitt durch sein Inneres, mit allen notwendigen Komponenten;
- Figur 2:: Den Automaten in einem Schnitt im Bereich des Brühgefässes, mit Fokus auf das herausnehmbare Brühgefäss;
- Figur 3:: Das Layout der elektrischen und mechanischen Komponenten mit Fokus auf das Heizsystem;
- Figur 4:: Drei Programmierungsschritte auf einem Smartphone zur drahtlosen Steuerung des Automaten;
- Figur 5:: Drei Programmierungsschritte auf dem Touchscreen des Automaten dargestellt;
- Figur 6:: Den Automaten in einem Schnitt im Bereich des Ablassventils, mit Fokus auf den Schiebe- und Verriegelungsmechanismus des Ventils in dessen offenem Zustand;
- Figur 7:: Den Automaten in einem Schnitt im Bereich des Ablassventils, mit Fokus auf den Schiebe- und Verriegelungsmechanismus des Ventils in dessen geschlossenem Zustand.

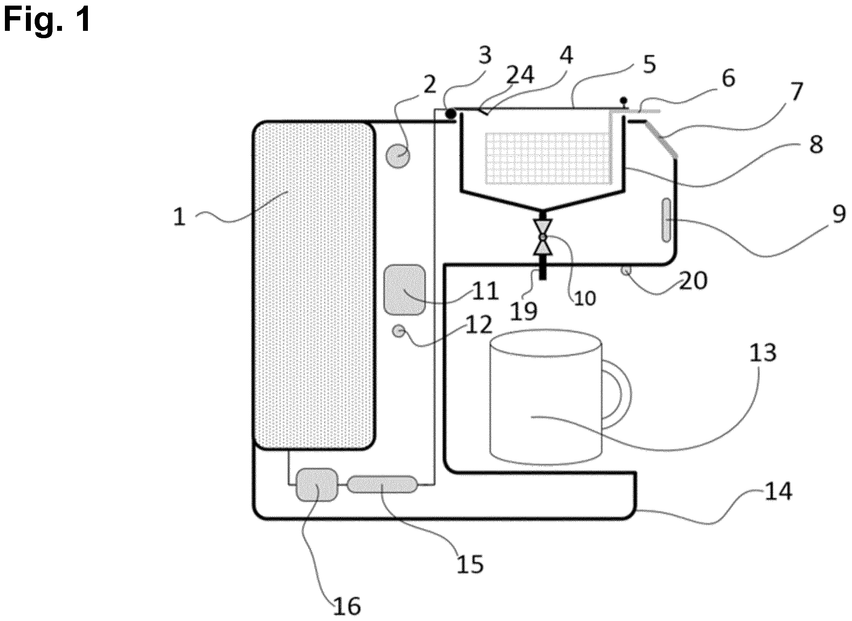

In Figur 1 ist der Automat im Querschnitt abgebildet. Zu sehen ist unter anderem das Gehäuse 14 des Automaten, welches je nach Serie unterschiedlich im Design und Material ausfallen kann. Das Gehäuse 14 beinhaltet unter anderem ein Bedienfeld 7, bestehend aus einem Touchscreen oder konventionellen Drehschaltern und Knöpfen, über welche der Benutzer sein gewünschtes Zubereitungsprogramm auswählen kann. Auf dem Bedienfeld 7 sind für den Benutzer alle notwendigen Parameter für den Brühprozess, den Teezubereitungsprozess - oder auch Zubereitungsprogramm genannt - ersichtlich. Für alle Parameter, welche der Benutzer einstellen bzw. programmieren kann, sind Standardwerte eingetragen, welche der Benutzer jedoch nach seinem Geschmack verändern kann. Dazu gehören: Die benötigte Wassermenge, die Brühtemperatur des Wassers und die Brühzeit oder Zubereitungszeit oder Ziehzeit. Der Automat beinhaltet ein speicherprogrammierbares Steuermodul 11 mit einem Mikrochip, welches alle Prozesse steuert und überwacht. Um die Einstellungen vorzunehmen hat der Benutzer folgende Möglichkeiten:
1. direkt am Automaten mittels des Bedienfeldes 7.
2. Mit Hilfe seines Smartphones und einer passenden App oder eines Computers, welcher sich über eine Funkverbindung mit dem Automaten mit Hilfe einer zum Automaten gehörenden Funkantenne 9 verbindet.

Nachdem der Benutzer sein gewünschtes Zubereitungsprogramm eingestellt und gestartet hat, wird als Erstes das Wasser, welches sich im Wasserbehälter 1 für die Teezubereitung befindet, mit Hilfe der Pumpe 16, vorzugsweise eine Schwingankerpumpe, durch das Heizsystem 15 befördert, wo es auf die eingestellte Temperatur erhitzt und anschliessend in das Brühgefäss 8 transferiert wird. Alle Vorgänge werden von einer zentralen speicherprogrammierbaren Steuereinheit gesteuert. Als Variante kann das Gehäuse 14 einen Wasseranschluss-Stutzen zum Anschliessen eines Schlauches ab dem Leitungswassernetz aufweisen, sowie ein Magnetventil zum elektromagnetisch betätigten Öffnen und Schliessen für die gesteuerte Zufuhr von Leitungswasser in das Brühgefäss 8. Weiterhin kann anstelle vom Touchscreen 7 die Bedienung durch Bedienknöpfe wie Druck- und Drehschalter erfolgen.

Wie die Figur 1 zeigt, befindet sich im Brühgefäss 8 ein Brühsieb 6 in Form eines wasserdurchlässigen Aufnahmebehälters, welcher den Tee oder Teebeutel aufnimmt, und das Brühgefäss 8 kann durch einen Deckel 5, welcher am Gehäuse 14 durch ein Scharnier 3 angebracht ist, geschlossen werden, um Verschmutzungen und Staubablagerungen während des Nichtgebrauchs zu vermeiden. Das Brühgefäss 8 weist einen Ablassschlauch 19 mit einem Ablassventil 10 auf. Ein Trinkgefäss 13 kann auf das Gehäuse 14 unter den Ablassschlauch 19 gestellt werden, wie in Figur 1 dargestellt. Das Brühgefäss 8 kann leicht herausgenommen werden, um es zu reinigen. Ebenfalls dient der Deckel 5 als Schutzeinrichtung während des Zubereitungsprozesses des Tees, um den Benutzer vor Verbrennungen zu schützen. Für den Fall, dass der Automat während des Zubereitungsprozesses umkippen sollte, verhindert der Deckel 5, dass das heisse Wasser sofort auslaufen kann. Der Deckel 5 ist hierzu mit einem Schnappverschluss ausgestattet, welcher sicherstellt, dass der Deckel 5 nur auf Wunsch vom Benutzer geöffnet werden kann. Weiterhin beinhaltet der Deckel 5 einen Wasserauslass 4 mit eingebautem Temperaturfühler 24, welcher die Wassertemperatur überwacht. Ebenfalls ein Teil der Wassertemperaturüberwachung ist der Drucksensor 12, welcher den barometrischen Druck überwacht, damit sichergestellt werden kann, dass das Wasser nicht über den Siedepunkt aufgeheizt werden kann. Weiter erkennt man am Gehäuse 14 ein Sound- oder Signalmodul 2, um dem Benützer anzugeben, dass der Tee trinkbereit ist. Das Gehäuse 14 ist ausserdem mit einer Kamera 20 ausgerüstet, zum Erstellen von Fotos von verschiedenen Teesortenverpackungen, wie das später noch erläutert wird, und es ist mit einer Funkantenne 9 ausgerüstet.

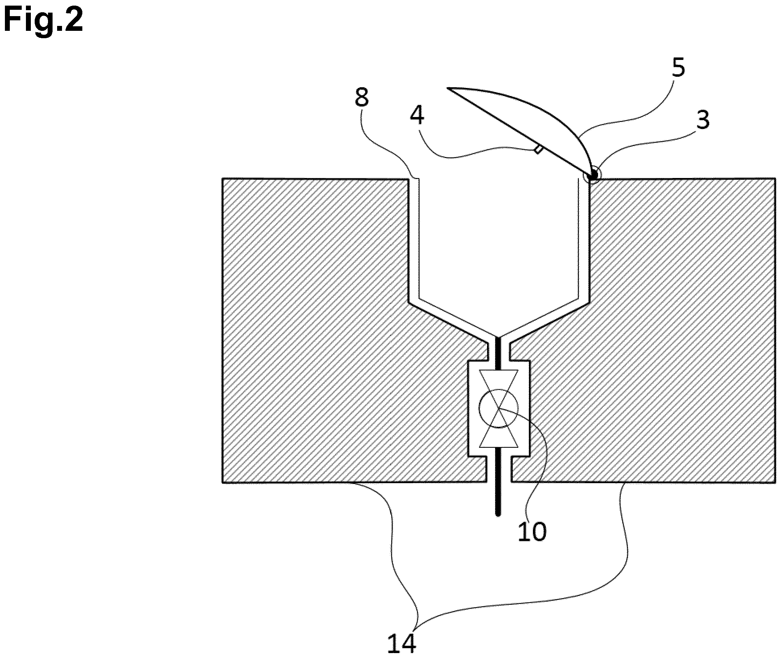

Das Wasser wird vom Heizsystem 15 bis zur im Zubereitungsprogramm eingestellten Temperatur aufgeheizt. Die Figur 2 zeigt das Brühgefäss 8 in einem Schnitt. Die Temperaturmessung erfolgt mit Hilfe eines Temperatursensors 24, welcher im Deckel 5 des Brühgefäss 8 am Wasserauslass 4 angebracht ist. Nachdem die gewünschte Menge an heissem Wasser in das Brühgefäss 8 transferiert wurde, beginnt der Brühprozess oder Zubereitungsprozess oder Brühvorgang. Die Wassermenge wird mittels Zeitmessung in Anbetracht der Durchflussrate der Pumpe 16 bestimmt, gesteuert von der speicherprogrammierbaren Steuereinheit 11. Der Brühprozess wird so lange andauern wie es der Benutzer im Zubereitungsprogramm eingestellt hat. Die Brühzeit wird über eine Zeitmessung gesteuert. Nachdem der Brühprozess die vom Brühprogramm vorgegebene Dauer erreicht hat, wird das Ablassventil 10 elektromagnetisch oder elektrisch von der Steuereinheit 11 ausgelöst geöffnet, und der fertig zubereitete Tee wird über den Ablassstutzen oder Ablassschlauch 19 in ein geeignetes Trinkgefäss 13, zum Beispiel in eine Teetasse, entleert. Das Trinkgefäss 13 befindet sich unterhalb des Brühgefässes 8 abgestellt auf dem Gehäuse 14. Durch diese Anordnung von Brühgefäss 8 und Trinkgefäss 13 wird keine weitere Pumpe für den Transfer des Tees aus dem Brühgefäss 8 in das Trinkgefäss 13 benötigt, was sich als ein weiterer Vorteil dieser Gestaltung des Automaten erweist. Nachdem der Tee komplett in das Trinkgefäss 13 abgelassen wurde, wird der Benutzer über einen Signalton, welcher vom Sound- oder Signalmodul 2 generiert wird, darüber informiert, dass der Tee sich im Trinkgefäss 13 befindet und das Trinkgefäss 13 aus dem Automaten entnommen werden kann. Die ganze Steuerung, Überwachung und Regelung erfolgt gemäss einem aus einer Vielzahl von spezifischen Zubereitungsprogrammen jeweils ausgewählten Programm über die Steuereinheit 11. Für die Parametrierung des gewünschten Zubereitungsprogramms kann auch eine eigens für den Automaten entwickelte Smartphone App verwendet werden. Das Smartphone wird über Schnittstelle mit einer Funkantenne 9 (Figur 1) mit dem Automaten verbunden, zum Beispiel mittels des WIFI, mittels Bluetooth oder mittels eines anderen Standards eines Computers bzw. Laptops via Internet, sodass der Automat fernbedienbar ist.

Die Figur 2 zeigt ein das Brühgefäss 8 innerhalb des Automaten, von dem hier der Umriss des Gehäuses 14 gezeigt ist. Das Brühgefäss 8 ist zu Reinigungszwecken aus seiner Halterung im Automaten herausnehmbar. Am unteren Ende ist das Brühgefäss 8 mit einem Ablassventil 10 ausgestattet. Oben ist das Brühgefäss 8 offen und mit einem Deckel 5 verschliessbar, welcher hier um ein Schwenkscharnier 3 auf den Rand des Brühgefässes 8 abschwenkbar ist. Ein Wassereinlass 4 mit eingebautem Temperatursensor 24 ist durch den Deckel 5 hindurch geführt.

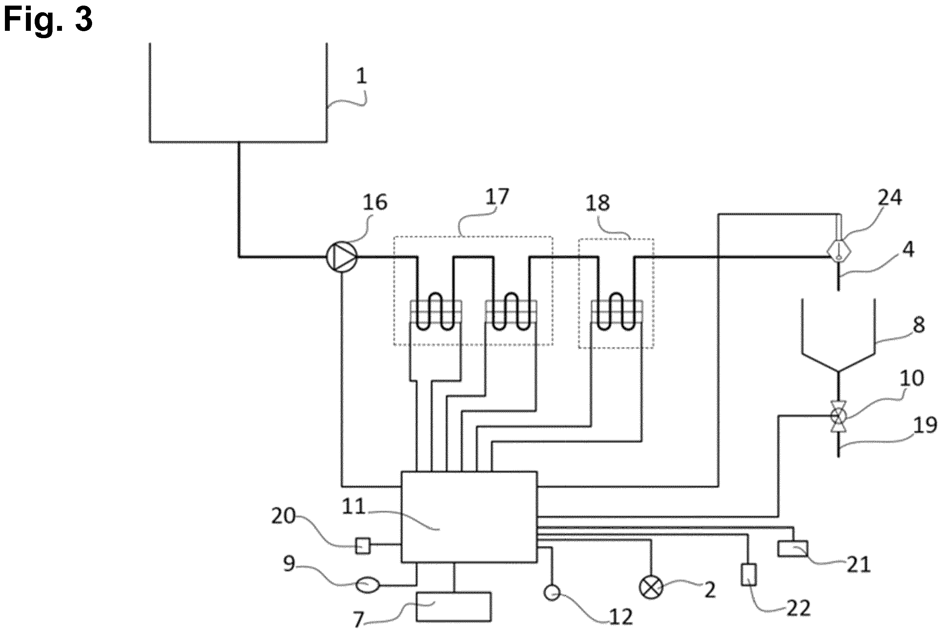

Die Figur 3 zeigt das besondere und ausgeklügelte Heizsystem 15 in schematischer Darstellung. Dieses Heizsystem 15 ist zwischen dem Wasserbehälter 1 und dem Brühgefäss 8 wirksam. Das Wasser wird von einer Schwingankerpumpe 16 durch das Heizsystem gepumpt. Das so gepumpte Wasser gelangt zunächst in eine Vorheizung 17, welche eine oder auch zwei in Serie geschaltete Elektroheizungen einschliessen kann. Im Anschluss an diese Vorheizung 17 ist eine Nachheizung 18 eingebaut. Die Vorheizung 17 besteht aus einem oder zwei in Serie geschalteten Heizelementen mit einer Gesamtleistung von wenigstens 1300 bis 1700 Watt. Die taktbare Nachheizung 18 weist eine Leistung von wenigstens 900 bis 500 Watt auf, sodass eine Gesamtleistung von wenigstens 2200 Watt verfügbar ist. Dieses Heizsystem 15 ist von der Steuereinheit 11 steuerbar. Die Schwingankerpumpe 16 ist ebenfalls von der Steuereinheit 11 gesteuert mit einer Taktfrequenz von 100ms - 400ms, die intermittierend ein- und ausschaltbar ist, sodass das Wasser, wenn notwendig, entsprechend langsam und kontrolliert durch die Heizelemente zur Erhitzung des durchlaufenden Wassers aus dem Wasserbehälter 1 in das Brühgefäss 8 pumpbar ist. Der Drucksensor 12 dient zur Messung des atmosphärischen Druckes. Seine Signale werden in die Steuereinheit 11 eingespeist und von dieser berücksichtigt, weil es nicht einerlei ist, ob ein Tee auf Meereshöhe zubereitet wird oder irgendwo hoch in den Bergen, weil sich der Siedepunkt von Wasser je nach Druck verändert. Die Steuereinheit 11 steuert die verschiedenen Heizelemente der Vorheizung 17 und Nachheizung 18. Der Temperatursensor 24 nimmt die Temperatur des aus dem Wasserbehälter 1 durch das Heizsystem aufgeheizten und zugeführten Wassers direkt vor seinem Ausfliessen in das Brühgefäss 8 ab. Das Signal des Temperatursensors 2 wird über ein Kabel an die Steuereinheit 11 weitergegeben. Ein elektrisches oder elektromagnetisches Auslassventil 10 ist am unteren Ende des Brühgefässes 8 angeordnet, sodass durch die Steuereinheit 11 bestimmt heisses Wasser aus dem Brühgefäss 8 entlassen werden kann. Der Ablauf der Regelung der Heisswasser-Aufbereitung vollzieht sich so: Zunächst werden sowohl die Vorheizung 17 wie auch die Nachheizung 18 eingeschaltet. Nach ca. 2 bis 5 Sekunden wird die Schwingankerpumpe 16 im "getaktetem Modus" mit einer Taktfrequenz von 100ms - 400ms eingeschaltet. Sobald das ausströmende Wasser die vom Benutzer eingestellte Temperatur durch Messung mittels des Temperatursensors 24 erreicht hat, wird die Schwingankerpumpe 16 auf Dauerbetrieb umgeschaltet. Fortan wird die Temperatur durch das Umschalten zwischen "getaktetem Modus" und "Dauerbetrieb" der Schwingankerpumpe 16 geregelt. Sollte die Temperatur im "Dauerbetrieb" trotzdem zu hoch werden, wird zusätzlich die Nachheizung 18 getaktet, mit einer Taktfrequenz im Sekundenbereich. Sollte die Temperatur zu tief sein, wird bei eingeschalteter Vorheizung 17 und Nachheizung 18 die Taktfrequenz der Schwingankerpumpe 16 soweit verringert, bis die eingestellte Temperatur erreicht wird. Der Drucksensor 12 überprüft den barometrischen Druck und gewährleistet dadurch, dass das austretende Wasser stets im flüssigem Aggregatzustand bleibt, indem der Siedepunkt des Wassers druckabhängig überwacht und durch die Steuerung dafür gesorgt wird, dass die Siedetemperatur nie erreicht oder gar überschritten wird.

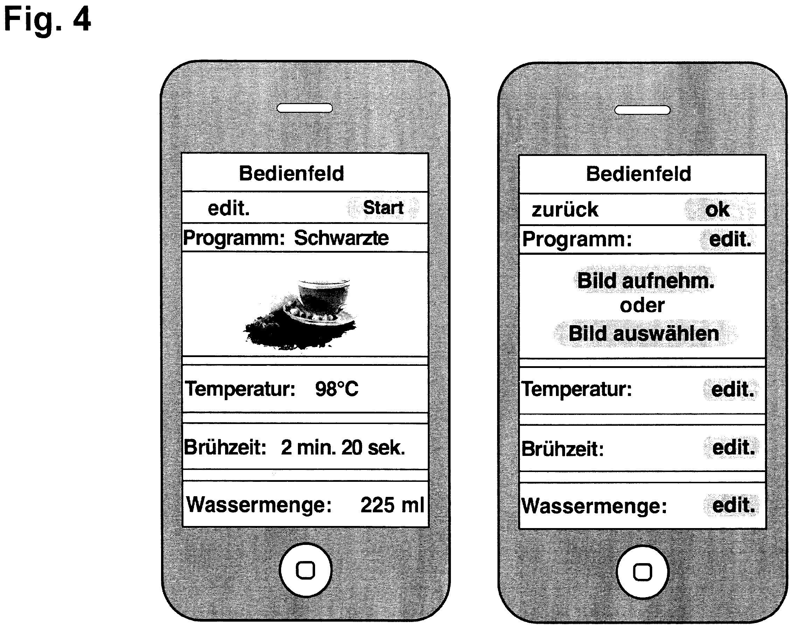

Die Figur 4 zeigt ein Beispiel, wie die Smartphone App, mit der die einzelnen Zubereitungsprogramme konfiguriert werden, aussehen kann. Gut ersichtlich ist das Bild vom Tee und seiner Sorte, und die Zubereitungsparameter, welche für die auf dem Bild abgebildete Teesorte angewendet werden. Das Bild wird vom Benutzer entweder mit der im Automaten eingebauten digitalen Kamera 20 oder mit der im Smartphone eingebauten Kamera aufgenommen.

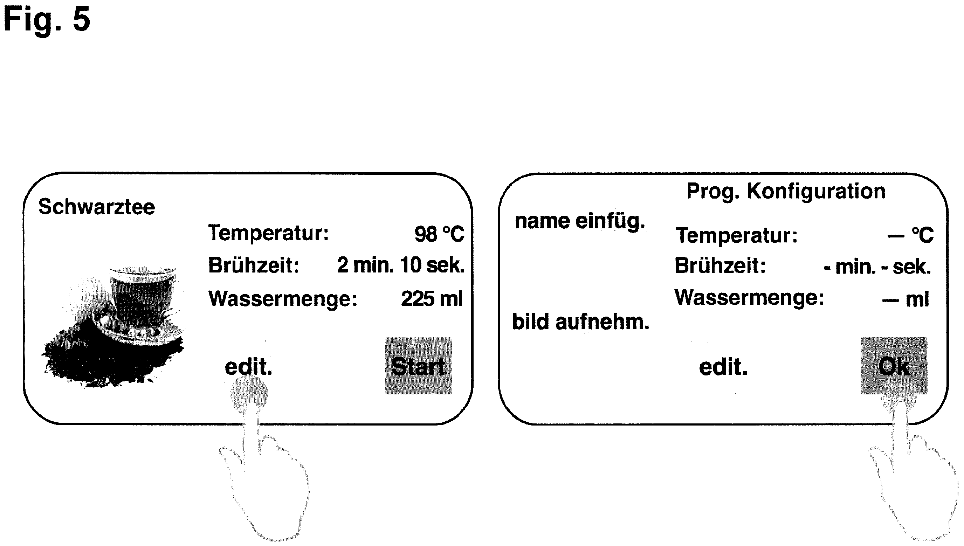

Die Figur 5 zeigt analog zur Darstellung in Figur 4 ein weiteres Beispiel, wie das Benutzerinterface, nämlich der im Automaten eingebaute Touchscreen im Bedienfeld 7 gestaltet werden kann, damit die einzelnen Zubereitungsprogramme konfiguriert werden können. Ebenfalls ersichtlich sind das Bild vom Tee und die Zubereitungsparameter, welche für die auf dem Bild abgebildete Teesorte angewendet werden.

Die individuelle Programmierung ermöglicht es dem Benutzer, mehrere Zubereitungsprogramme für unterschiedliche Teesorten zu erstellen, wobei die Verpackungen der unterschiedlichen Teesorten mit der eingebauten digitalen Kamera 20 oder über die Smartphone App aufgenommen werden und dann auf dem Touchscreen des Automaten angezeigt werden können. Dadurch erleichtert man dem Benutzer die Auswahl seines gewünschten Tee- Zubereitungsprogramms, welches er zuvor auf die unterschiedlichen Teesorten angepasst hat. Er braucht bloss noch auf dem Touchscreen das Bild der entsprechenden Teesorten-Packung anzutippen und schon wird beim Start das richtige Zubereitungsprogramm von der Steuereinheit 11 abgearbeitet.

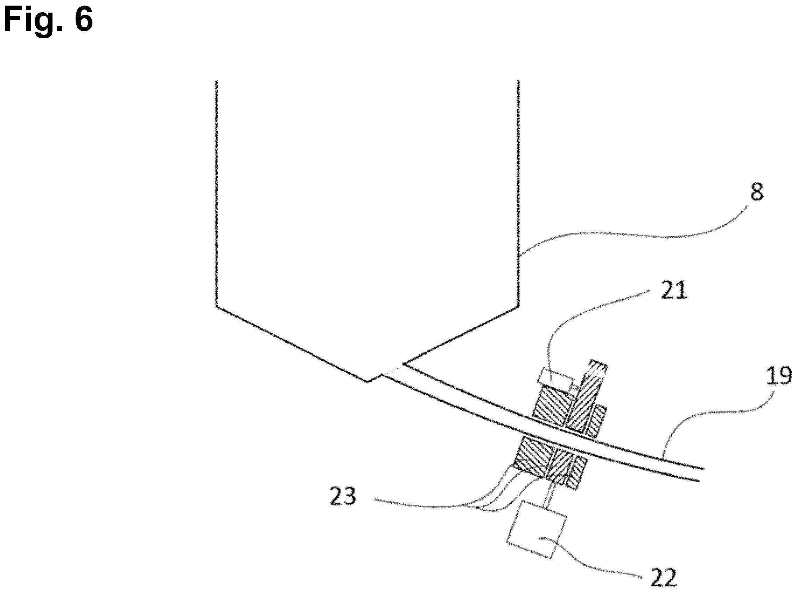

Die Figur 6 zeigt den Bereich des Ablassventils 10 in "offenem" Zustand des Ablassventils 10. Man erkennt einen Schiebemechanismus 23, durch welchen der AblassSchlauch 19, welcher aus dem Brühgefäss 8 führt, verbunden ist, durchgeführt wird. Ebenfalls zu erkennen ist der Verriegelungsschieber 21, betätigt von einem Elektromagneten, und einen Zugschieber 22, ebenfalls von einem Elektromagneten betätigt. In diesem Zustand befindet sich das Ventil 10, wenn der Automat in Stand-by-Modus ist oder wenn der Tee bzw. heisses Wasser entleert wird.

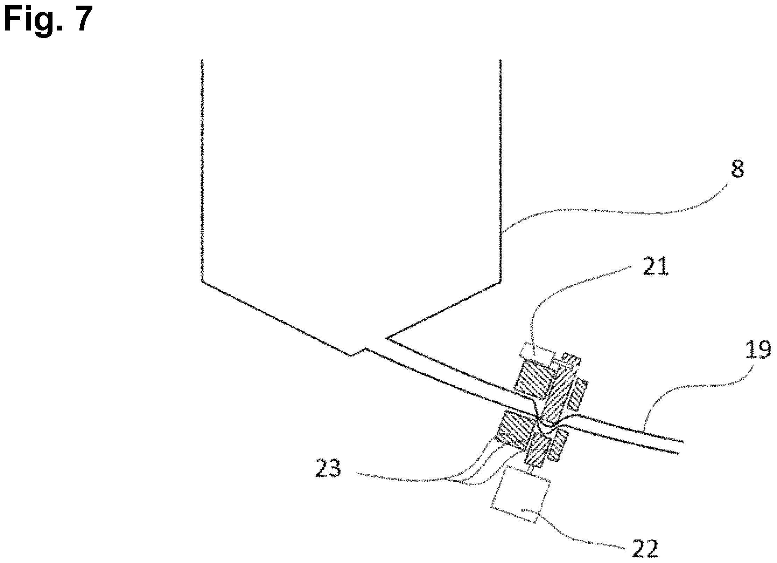

Die Figur 7 zeigt den Bereich des Ablassventils 10 in "geschlossenem" Zustand des Ablassventils 10. Man erkennt den Schiebemechanismus 23, durch welchen der AblassSchlauch 19, der aus dem Brühgefäss 8 geführt ist, durchgeführt wird. Ebenfalls zu erkennen ist der Verriegelungsschieber 21 mit seinem Elektromagneten für seine Betätigung und den Zugschieber 22, ebenfalls von einem zugehörigen Elektromagneten betätigbar. In diesem Zustand befindet sich das Ablassventil 10, wenn der Brühprozess gerade stattfindet oder das Brühgefäss mit heissem Wasser befüllt wird. Dabei wird der Elektromagnet des Zugschiebers 22 kurz angeregt und dadurch der Schlauch 19 gequetscht. Sobald der Zugschieber seine Schliessposition erreicht hat, wird der Verriegelungsschieber 21 durch Anregung des zugehörigen Elektromagneten aktiviert und der Elektromagnet für den Zugschieber 22 wird abgeschaltet. Diese Konstruktion ermöglicht es, kleine Elektromagnete zu verbauen und dadurch minimale thermische Belastungen auf die Bauteile auszuüben, um dadurch die Lebensdauer der Bauteile zu verlängern.

### Ziffernverzeichnis

1. Wasserbehälter
2. Sound- oder Signalmodul
3. Scharnier für Deckel
4. Wasserauslass im Deckel
5. Deckel
6. Brühsieb
7. Bedienfeld
8. Brühgefäss
9. Funkantenne
10. Ablassventil
11. Steuereinheit
12. Drucksensor
13. Trinkgefäss
14. Gehäuse
15. Heizsystem
16. Schwingankerpumpe
17. Vorheizung
18. Nachheizung
19. Schlauch
20. Kamera
21. Elektromagnet, Verriegelungsschieber
22. Elektromagnet, Zugschieber
23. Schiebemechanismus
24. Temperatursensor

## Patentansprüche

1. Automat zum Zubereiten von Tee, das heisst Beuteltee oder Tee in Pulverform und Ausgabe in ein Trinkgefäss, wobei er ein Gehäuse (14) mit Abstellfläche für ein Trinkgefäss (13) aufweist, und ein entnehmbares Brühgefäss (8) zur Aufnahme des Tees, wobei das Brühgefäss (8) oder das zugeführte Wasser mittels einer elektrischen Heizeinrichtung aufheizbar ist, sowie mit einer Wasserzufuhr mittels Pumpe (16) aus einem zum Gehäuse (14) gehörenden, herausnehmbaren Wasserbehälter (1) oder durch einen Leitungswasser-Anschluss, **dadurch gekennzeichnet, dass** das Gehäuse (14) eine Steuereinheit (11) mit einem Mikrochip einschliesst, mit zugehörigem Bedienfeld (7), über das mindestens die Brühtemperatur, die Brühdauer sowie der Start eines Brühzyklus einstellbar sind, weiter dass die Pumpe (16) eine getaktete Schwingankerpumpe ist, und der Wasserauslass im Deckel (4) in das Brühgefäss (8) mit einem Temperatursensor (24) ausgerüstet ist, dessen Signale von der Steuereinheit (11) verarbeitbar sind, und dass ein Drucksensor (12) vorhanden ist, zur Messung des barometrischen Druckes und Verarbeitung dieses Druckes in der Steuereinheit (11), zur Vermeidung eines Siedens des Wassers, das für die Teezubereitung bestimmt ist, und welches mit Hilfe eines Heizsystems (15) erhitzbar ist.

2. Automat zum Zubereiten von Tee nach Anspruch 1, **dadurch gekennzeichnet, dass** ein Interface in Form einer Funkschnittstelle mit zugehöriger Funkantenne (9), zur Kommunikation der Steuereinheit (11) mit einem Smartphone über einen etablierten Kommunikationsstandard, vorzugsweise WIFI, Bluetooth, oder einem Computer oder Laptop via Internet vorhanden ist, sodass der Automat fernbedienbar ist.

3. Automat zum Zubereiten von Tee nach einem der vorangehenden Ansprüche, **dadurch gekennzeichnet, dass** der spezifischen Brühtemperatur und Brühdauer mehrere unterschiedliche Modi für verschiedene Teesorten via Bedienfeld (7) oder Smartphone der Schnittstelle in der Steuereinheit (11) zuordenbar sind und die spezifische Brühtemperatur und Brühdauer individuell am Bedienfeld (7) oder via Smartphone einstellbar sind.

4. Automat zum Zubereiten von Tee nach einem der vorangehenden Ansprüche, **dadurch gekennzeichnet, dass** das Brühgefäss (8) einen Ablass-Stutzen (19) mit elektrischem oder elektromagnetisch betätigbarem Ablassventil (10) aufweist, welches von der Steuereinheit (11) gesteuert öffnen- und schliessbar ist.

5. Automat zum Zubereiten von Tee nach einem der vorangehenden Ansprüche, **dadurch gekennzeichnet, dass** die elektrische Heizeinrichtung ein zweistufiges Heizsystem (15) einschliesst, bestehend aus einer Vorheizung (17) aus einem oder zwei in Serie geschalteten Heizelementen mit einer Gesamtleistung von mindestens 1300 Watt, sowie einer taktbaren Nachheizung (18) mit einer Leistung von mindestens 500 Watt, wobei eine Gesamtleistung von wenigstens 2200 Watt verfügbar ist, und welches Heizsystem (15) von der Steuereinheit (11) steuerbar ist, und die Schwingankerpumpe (16) von der Steuereinheit (11) gesteuert mit einer Taktfrequenz von 100ms - 400ms intermittierend ein- und ausschaltbar ist, sodass das Wasser, wenn notwendig, entsprechend langsam und kontrolliert durch die Heizelemente, zur Erhitzung des durchlaufenden Wassers aus dem Wasserbehälter (1) in das Brühgefäss (8) pumpbar ist.

6. Automat zum Zubereiten von Tee nach einem der Ansprüche 1 bis 4, **dadurch gekennzeichnet, dass** das Brühgefäss (8), in dem der Brühprozess stattfindet, mit einem Heizelement zur Aufheizung des Brühgefässes ausgestattet ist, welches sich unterhalb und/oder um den Brühgefässboden herum angeordnet befindet, und von der eingebauten Steuereinheit (11) mit Hilfe der Signale eines im Brühgefäss (8) eingebauten Temperatursensors (24) regelbar ist, und dass das elektrisch oder elektromagnetisch betätigbare Ablassventil (10) des Brühgefässes (8) von der Steuereinheit (11) öffnen- und schliessbar ist.

7. Automat zum Zubereiten von Tee nach einem der vorangehenden Ansprüche, **dadurch gekennzeichnet, dass** das Brühgefäss (8) von oben in das Gehäuse (14) einstellbar und aus diesem durch einfaches Herausheben herausnehmbar ist, und dass es einen Deckel (5) mit eingebautem Wasserauslass mit (4) mit integriertem Temperatursensor (24) aufweist.

8. Automat zum Zubereiten von Tee nach einem der vorangehenden Ansprüche, **dadurch gekennzeichnet, dass** das Gehäuse (14) eine eingebaute digitale Kamera (20) umfasst, zur Aufnahme und Ablage von Teesorten-Verpackungen, und die aufgenommenen Bilder auf dem Touchscreen am Bedienfeld (7) anzeigbar sind, und in der Steuereinheit (11) jeder bestimmten Teesorte ein zugehöriger speicherbarer Betriebsmodus mit spezifischer Brühdauer und Brühtemperatur zuordenbar ist, sodass das zugehörige spezifische Zubereitungsprogramm durch Berühren des Bildes auf dem Touchscreen am Bedienfeld (7) wählbar ist.

9. Automat zum Zubereiten von Tee nach einem der vorangehenden Ansprüche, **dadurch gekennzeichnet, dass** das Gehäuse (14) einen Wasserbehälter (1) zur Aufnahme von Wasser für mehrere Tassen Tee aufweist, aus welchem mittels der Schwingankerpumpe (16) von der eingebauten Steuereinheit (11) gesteuert Wasser in das Brühgefäss (8) pumpbar ist.

10. Automat zum Zubereiten von Tee nach einem der Ansprüche 1 bis 8, **dadurch gekennzeichnet, dass** das Gehäuse (14) einen Wasseranschluss-Stutzen zum Anschliessen eines Schlauches ab dem Leitungswassernetz aufweist, sowie ein Magnetventil zum Öffnen und Schliessen für die gesteuerte Zufuhr von Leitungswasser in das Brühgefäss (8).

## Claims

1. Machine for the preparation of tea, in particular tea in tea bags or tea in the form of powder and its dispensing into a beverage container, which comprises a housing (14) with a positioning surface for a beverage container (13) and a removable brewing container (8) for reception of the tea, whereby the brewing container (8) or the added water is heatable by an electrical heating device, further comprising an extractable water container (1) or a tap water connection being configured as a portion of the housing (14) comprising a water supply by a pump (16) **characterized in that** the housing (14) comprises a control unit (11) including a microchip, comprising a corresponding control panel (7) by which at least the infusion temperature, the infusion time period as well as the beginning of an infusion cycle can be adjusted, whereby the pump (16) is a synchronized vibrating armature pump and the water outlet (4) is equipped with a temperature sensor (24) and the water outlet (4) into the brewing container is arranged in a lid whereby the signals from the temperature sensor can be processed by the control unit (11), whereby a pressure sensor (12) for measurement of the barometric pressure is provided and means for the processing of this pressure in the control unit for preventing boiling of the water which is to be used for the preparation of tea and which is heatable by means of a heating system (15).

2. Machine for the preparation of tea according to claim 1, **characterized in that** an interface configured as a radio communication interface with corresponding antenna (9) is provided for the communication of the control unit (11) with a smartphone via an established communication standard, preferably WIFI, Bluetooth or a computer or laptop via internet, such that the machine is remotely controllable.

3. Machine for the preparation of tea according to one of the preceding claims **characterized in that** the specific infusion temperature and infusion time period are attributable to a plurality of different modes for different tea species by the control panel (7) or smartphone to the interface in the control unit (11) and **in that** the specific infusion temperature and infusion time period are adjustable individually at the control panel (7) or by the smartphone.

4. Machine for the preparation of tea according to one of the preceding claims **characterized in that** the infusion vessel (8) includes a drain stub (19) comprising an electrically or electromagnetically actuatable drain valve (10) which can be opened or closed controlled by the control unit (11).

5. Machine for the preparation of tea according to one of the preceding claims **characterized in that** the electrical heating device includes a two-stage heating system (15) consisting of a preheater (17) and one or two heating elements arranged in series with a total power of at least 1300 Watt, and a synchronizable additional heater (18) having a power of at least 500 Watt such that a total power of at least 2200 Watt is available and the heating system (15) is controllable by the control unit (11) and the vibrating armature pump (16) is controllable by the control unit (11) with an clocking frequency of 100ms - 400ms which can be switched on and off intermittently, such that the water can be pumped slowly and in a controlled manner through the heating elements for heating of the water passing from the water container (1) to the brewing container (8).

6. Machine for the preparation of tea according to one of claims 1 to 4, **characterized in that** the brewing container (8) in which the infusion process take place is disposed with a heating element for heating the brewing container which is arranged below and/or around the bottom of the brewing container and which can be controlled by the inbuild control unit (11) by means of the signals of a temperature sensor (24) arranged in the brewing container (8) and the electrical or solenoid drain valve (10) of the brewing container (8) can be opened or closed controlled by the control unit (11).

7. Machine for the preparation of tea according to one of the preceding claims **characterized in that** the brewing container (8) can be placed into the housing (14) from above and is extractable therefrom by its removal and whereby the brewing container (8) comprises a lid (5) with an inbuilt water outlet (4) comprising an integrated temperature sensor (24).

8. Machine for the preparation of tea according to one of the preceding claims **characterized in that** the housing (14) comprises an inbuilt digital camera (20) for recording and storing of a tea species packaging, whereby the recorded pictures are displayable on the touch screen of the control panel (7) and a corresponding storable operating mode is attributable to each particular tea species with specific infusion time period and infusion temperature in the control unit, such that the corresponding specific preparation routine is selectable by touching the picture on the touch screen of the control panel (7).

9. Machine for the preparation of tea according to one of the preceding claims **characterized in that** the housing (14) comprises a water container (1) for the reception of water for a plurality of tea cups, from which the water is pumpable to the brewing container (8) by means of the vibrating armature pump (16) controlled by the inbuild control unit (11).

10. Machine for the preparation of tea according to one of claims 1 to 8, **characterized in that** the housing (14) comprises a water supply stub for connecting a hose to the tap water supply and a solenoid valve for opening or closing for a controlled supply of tap water to the brewing container (8).

## Revendications

1. Machine automatique pour l'infusion du thé, soit des sachets de thé ou de thé en poudre et de sortie dans un récipient à boire, **caractérisé en ce qu'**elle comprend un boîtier (14) ayant un espace de stockage pour un récipient à boire (13), et un récipient d'infusion amovible (8) pour recevoir le thé, dans laquelle le récipient d'infusion (8) ou l'eau fournie peuvent être chauffés par un dispositif de chauffage électrique, ainsi qu'elle comprend une alimentation en eau au moyen d'une pompe (16) du boîtier (14) associé avec un réservoir d'eau amovible (1) ou par un raccord d'eau du robinet, **caractérisé en ce que** le boîtier (14) comprend une unité de commande (11) avec une puce électronique, avec un panneau de commande associé (7) par l'intermédiaire duquel au moins la température d'infusion, le temps d'infusion et le début d'un cycle d'infusion peut être ajustée, en outre, **en ce que** la pompe (16) est une pompe à armature vibrante synchronisée, et la sortie d'eau dans le couvercle (4) du récipient d'infusion (8) est équipée d'un capteur de température (24) dont les signaux provenant de l'unité de commande (11) peuvent être transformés, et **en ce qu'**un capteur de pression (12) est prévu pour mesurer la pression barométrique et pour la transformation de cette pression dans l'unité de commande (11) pour empêcher l'ébullition de l'eau qui est destinée à faire le thé, et qui est chauffé par moyen d'un système de chauffage (15).

2. La machine automatique pour l'infusion du thé selon la revendication 1, **caractérisé en ce qu'**il existe une interface sous forme d'interface radio avec antenne radio associée (9) pour la communication de l'unité de commande (11) avec un smartphone via un standard de communication établi, de préférence WIFI, Bluetooth, ou un ordinateur ou un ordinateur portable via Internet, de sorte que la machine puisse être utilisée à distance,

3. La machine automatique pour l'infusion du thé selon une des revendications précédentes, **caractérisé en ce que** plusieurs modes différents de la température d'infusion spécifique et de la période d'infusion pour les thés différents peuvent être attribués à l'interface de l'unité de commande (11) par le tableau de commande (7) ou le smartphone et la température d'infusion spécifique et la période d'infusion sont réglables individuellement par le tableau de commande (7) ou le smartphone.

4. La machine automatique pour l'infusion du thé selon une des revendications précédentes, **caractérisée en ce que** le récipient d'infusion (8) comporte une buse d'évacuation (19) avec une soupape de vidange (10) à commande électrique ou électromagnétique qui est ouvrable et verrouillable commandée par l'unité de commande (11).

5. La machine automatique pour l'infusion du thé selon une des revendications précédentes, **caractérisé en ce que** le dispositif de chauffage électrique comprend un système de chauffage à deux étages (15) consistant en un préchauffeur (17) d'un ou deux éléments chauffants raccordés en série avec une puissance totale d'au moins 1300 watts et un réchauffage intermittente avec une puissance d'au moins 500 watts, avec une puissance totale disponible d'au moins 2200 watts, et lequel système de chauffage (15) peut être commandé par l'unité de commande (11), et la pompe à armature vibrante (16) peut être mise en marche et éteinte par intermittence commandée par l'unité de commande (11) avec une cadence à la fréquence de 100ms à 400ms de sorte que l'eau est pompable, si nécessaire, lentement et contrôlée par les éléments chauffants, pour chauffer l'eau qui s'écoule du réservoir d'eau (1) dans le récipient d'infusion (8).

6. La machine automatique pour l'infusion du thé selon une des revendications 1 à 4, **caractérisé en ce que** le récipient d'infusion (8) dans lequel se déroule le processus d'infusion est pourvu d'un élément chauffant pour chauffer le récipient d'infusion situé au-dessous et / ou autour du fond du récipient d'infusion et l'élément chauffant est réglable par l'unité de commande intégrée (11) par les signaux d'un capteur de température (24) intégré dans de récipient d'infusion (8) et **en ce que** la soupape de vidange à commande électrique ou électromagnétique (10) du récipient d'infusion (8) peut être ouverte et fermée par l'unité de commande (11).

7. La machine automatique pour l'infusion du thé selon une des revendications précédentes, **caractérisé en ce que** le récipient d'infusion (8) peut être mis par le haut dans le boîtier (14) et peut être amovible du celui-ci en le soulevant simplement et **en ce qu'**il comporte un couvercle (5) avec une sortie d'eau intégrée (4) avec un capteur de température intégré (24).

8. La machine automatique pour l'infusion du thé selon une des revendications précédentes, **caractérisé en ce que** le boîtier (14) comprend une caméra numérique intégrée (20) pour recevoir et stocker des paquets de types de thé spécifiques, et les images enregistrées sont affichées sur l'écran tactile sur le panneau de commande (7) et **en ce que** dans l'unité de commande (11) un mode de fonctionnement spécifique mémorisable avec un temps d'infusion et une température d'infusion spécifique est attribuable à des types de thé spécifiques, de sorte que le programme de préparation spécifique associé puisse être sélectionné en touchant l'image sur l'écran tactile du panneau de commande (7).

9. La machine automatique pour l'infusion du thé selon une des revendications précédentes, **caractérisé en ce que** le boîtier (14) comporte un réservoir d'eau (1) destiné à recevoir de l'eau pour plusieurs tasses de thé pouvant être pompé par moyen de la pompe à armature vibrante (16) de l'unité de commande intégrée (11).

10. La machine automatique pour l'infusion du thé selon une des revendications 1 à 8, **caractérisé en ce que** le boîtier (14) présente un raccord de raccordement à l'eau pour raccorder un tuyau du réseau d'eau du robinet et une électrovanne pour l'ouverture et la fermeture pour l'alimentation contrôlée de l'eau du robinet dans le récipient d'infusion (8).
